# EUROPEAN PATENT APPLICATION

(11) **EP 2 840 199 A1**
(43) Date of publication of application: **25.02.2015**
(21) Application number: 14179227.5
(22) Date of filing: 31.07.2014
(51) Int. Cl.: E04F 11/18, F16B 5/02

(54) **A barrier**

(30) Priority: 31.07.2013 IT BS20130113
(71) Applicant: Palumbo, Michel, 25123 Vill. Prealpino (BS) (IT)
(72) Inventor: Palumbo, Michel, 25123 Vill. Prealpino (BS) (IT)
(74) Representative: Trentin, Michele

(57) **Abstract**

A barrier couplable to a support structure **(S)** and comprising: laminar elements **(2)** manufactured in glass; coupling elements **(3)** of the laminar elements **(2)** to the support structure **(S).** The coupling elements **(3)** comprising one constraint point **(8; 108)** pliable along its longitudinal axis **(X),** the constraint point comprising: elastic means **(11; 111)** for the at least partial elastic return of the constraint point **(8; 108)** to the rest position from a position yielded after the application of a load to the barrier **(1);** visco-elastic means **(41)** for the partial absorption of the forces developed by the application of the load to the barrier **(1).**

## Description

### Definitions

In the present document, the term constraint point designates a localized constraint around a point.

### Field of application

The present invention is generally applicable in the techical field of barriers for people and, in particular, it relates to a baluster or, more in general, to a parapet.

More in detail, the present invention relates to the coupling of glass plates to a support structure to obtain barriers for people like balusters, parapets in general and the like.

### Prior art

For manufacturing balusters, railings and barriers for people it is known the use of materials like iron, similar metals and wood. The maintenance problems, the weight and the visual impact have contributed to the use of alternative materials like glass, which has different advantages like: it does not require much maintanance, it is easy to install, it is easy to use also in quality architectural contexts and it has low visual impact.

It is also known that barriers have to comply with safety norms about loads to be withstood.

In a first version, the barriers using glass have been manufactured with a supporting metallic frame and glass has been used as filling. In this sense, the metallic structure withstand the stresses and the solicitations and the consequence thereof is the easy compliance with the applicable safety norms.

However, such type of barriers is anyway heavy and with a strong visual impact.

In order to improve such solution, barriers comprising only glass plates coupled to the structure for which they have to represent the barrier have been manufactured. Typically they are manufactured as cantilevering barriers so as to minimize the visual impact and the use of other materials like metals or the like.

The known cantilevering barriers are typically obtained by coupling to the support structure glass plates by means of a coupling element called "with studs".

More in detail, the studs, or constraint points, are normally positioned according to vertical pairs. The inferior constraint point and the superior constraint point generate the necessary reaction torque to balance the outer torque generated by solicitations like the impact of loads which the barrier must withstand. The bigger the dimensions of the glass plates used, the higher the number of pairs placed to support the structure.

Such barriers, by law, must withstand not only the static thrust to be applied as load distributed at a predetermined height from the treaded surface, they must also withstand, independently from their dimensions, the impact of a predetermined load trasferred to the most unfavorable position. Typically it refers to soft body impact and it corresponds to the accidental impact of a human body in the most unfavorable point.

For the cantilevering barriers described above, the worst point coincides with the top of the glass plate along the axis of the pair of coupling elements.

With the different coupling systems available nowadays on the market, in principle all the glass barriers are able to withstand the static thrust foreseen in the norms, obvioulsy provided that the plates have been correctly dimensioned.

The "stud" coupling element, on the other hand, does not fulfill the criterium of resistance to soft body impact. In fact, even though glass is known to be flexible, the constraint points are extremely rigid and not able to follow the natural bending caused by the impact. In this sense, the constraint point reacts rigidly to the bending of the superior part of the glass plate leading the glass to follow a broken line. In this sense, the contact area between the superior part of the constraint point and the glass plate is a solicitation point for the glass which, in presence of excessive loads, leads to its breaking. Being the solicitation of glass typically of a point type, the loads it can withstand are typically inferior than those foreseen by the test of soft body impact.

### Presentation of the invention

It is object of the present invention to at least partially overcome the above mentioned drawbacks by providing a barrier which, even though a cantilevering one and manufactured with glass plates, can pass the tests of soft body impact.

Within the general object above described, one object in particular is to provide a barrier in which the constraint points allow the glass plates to bend.

Another object is that the barrier is able to comply with all the relevant norms in force.

Another object is that the barrier has a minimized visual impact so as to make it particularly useful in case of interventions on architectural heritage. Another object is that the barrier has to be aesthetically pleasing.

Another object is to provide a barrier which is particularly lightweight, but which, at the same time, comply, as mentioned above, with the norms in force in particular with the tests of soft body impact.

These and other objects, as better explained hereafter, are fulfilled by a barrier in accordance with the following claims, which are an integral part to the present description.

In particular, the barrier is susceptible to be coupled to a support structure comprising one or more substantially laminar elements partially manufactured in glass. Typically the type of glass is tempered and laminated in order to ensure resistance against static solicitations.

It comprises one or more coupling elements of the laminar elements to the support structure.

According to an aspect of the invention, at least one of such coupling elements comprises one constraint point at least partially pliable predominantly along the perpendicular axis with respect to the surface tangent to the laminar element around the same coupling element.

In other words, the constraint point ensures, due to its pliability, a loosening, even though contained, of the coupling on the laminar element. Advantageously, so, the glass plate may bend also in correspondence to the constraint point. The latter, so, is not a point in which the glass plate is led to identify a broken line like in the prior art. In this sense, the constraint point is not any more, compared with the prior art, a solicitation point of the glass plate which causes its breaking in presence of loads caused by soft body impact.

Advantageously, so, the invention barrier allows to comply with the norms in force, and also to pass the test of soft body impact.

According to a further aspect of the invention, the constraint point comprises elastic means for the at least partial elastic return of the constraint point to the rest position from a position at least partially yielded because of the application of a load to the barrier, and visco-elastic means for the partial absorption of the forces developed by the applicaton of the load to the barrier.

In other words, by applying a load the constraint point yields at least partially in order to allow the laminar element to bend also in correspondence to such point. However, advantageously, the presence of elastic means causes the at least partial return to the initial state of the constraint point when the solicitation of the load on the barrier is removed. Since, however, the elastic means tend to subtstantially release all the force accumulated due to the load application, the return may be violent. In this sense, the presence of visco-elastic means allows to absorb, due to the viscous component, such force at least partially and to decrease, so, the force returned by the elestic means, and this allows to soften the return to the rest position.

According to another aspect of the invention, said constraint point comprises trigger means for the control of the load which must be applied to the barrier for activating said pliability. In other words, the trigger means allow the constraint point, advantageously, to remain rigid for impacts of a level lower than a predetermined threshold, allowing the pliability only for loads exceeding such threshold.

Such characteristic is obtained at first by pre-compressing the elastic means, however the adding of trigger means allows to obtain a higher threshold.

### Brief description of the drawings

Further features and advantages of the invention will appear more evident upon reading the detailed description of some preferred, non-exclusive embodiments of a barrier according to the invention, which are described as non limiting examples with the help of the annexed drawings, in which:
FIG. 1 is a barrier according to the invention in perspective view;
FIGS. 2 and 3 are particulars of the barrier of fig. 1;
FIG. 4 is an embodiment of a particular of FIG. 1.

### Detailed description of some preferred embodiments

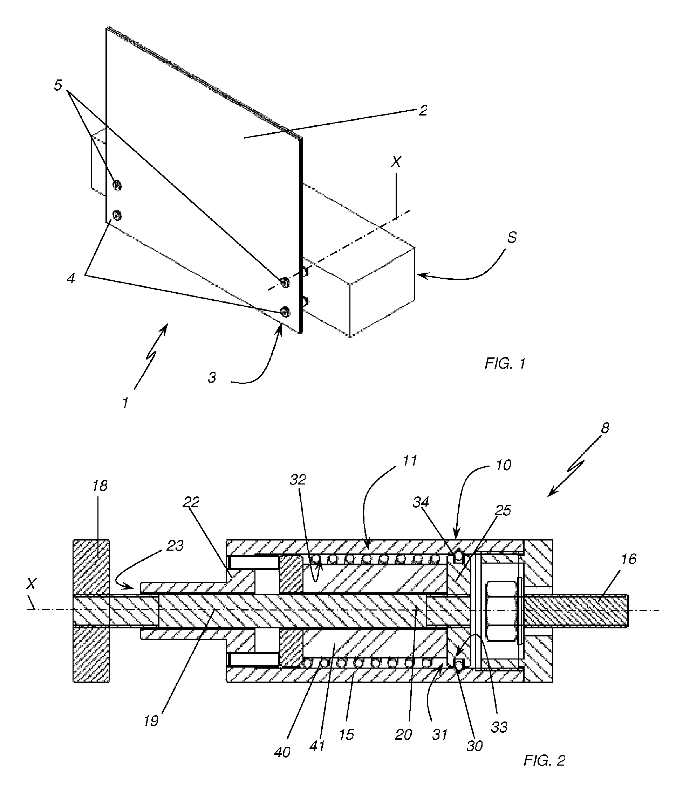

With reference to the cited figures, and in particular to fig. 1, a barrier **1** couplable to a support structure **S** is described. The function of such barrier is to hold back people and objects that otherwise would risk falling.

Typically the barrier **1** comprises a plurality of substantially laminar elements **2** manufactured in glass. Obviously the number of elements is a non limiting aspect of the invention, similarly, every element may be manufactured only partially in glass. Typically, anyway, it is tempered laminated glass.

The barrier **1** comprises also a plurality of coupling elements **3** of the laminar elements **2** to the support structure **S.** In particular, in the example of embodiment described, the coupling elements **3** are placed in pairs at the bottom of the laminar elements **2** of which one first element **4** is arranged near the inferior edge of the laminar element **2,** while the second coupling element **5** is arranged aligned to the first one **4,** but at an intermediate position of the laminar element **2.** Also in this case the number of the coupling elements **3** and their disposition are non limiting characteristics for the invention, since these are parameters related to technical-aesthetic choices, to the dimensions of the laminar elements **2,** to the loads which must be withstood, to the shape and to the constitution of the support structure **S.** For example, according to a possible embodiment, the coupling elements are not placed in pairs, but they are placed singularly. According to other embodiments, the coupling elements are placed next to the lateral edges of the laminar elements.

However, according to an aspect of the invention, at least one of the coupling elements **3** comprises a constraint point **8** observable in fig. 2. In particular, in the example of embodiment described, the second coupling element **5** is a constraint point **8,** while the first coupling element **4** is a hinge. However it is self-evident that this aspect is non limiting for the invention, since different embodiments are included anyway, according to which, for example, both elements of the pair are constraint points or the inferior one is a costraint point while the superior one is a hinge. According to a further embodiment mentioned above, the coupling elements are placed singularly and not in pairs and all comprise constraint points.

According to another aspect of the invention, each constraint point **8** is partially pliable along the longitudinal axis **X** of the constraint point **8** which corresponds, moreover, to the perpendicular axis with respect to the axis tangential to the laminar element **2** in correspondence to the same constraint point **8.**

Advantageously, said pliability allows the constraint point **8** to decrease its peculiar rigidity despite of coupling the laminar element **2** to the support structure **S.** In particular, this allows the glass constituting the laminar element **2** to bend also in correspondence to the pliable constraint point **8.**

In this sense, advantageously, the use of pliable constraint points **8** so manufactured is limited to those coupling elements **3** in correspondence to which it is important for the laminar elements **2** to be able to bend. The other coupling elements **3** may, so, comprise simple joints, rigid constraint points and the like. In the described example the coupling elements **3** which have only to ensure the vertical support of the laminar elements **2** may comprise simple joints.

Still advantageously, the point stressing perilously the glass is in this way eliminated allowing the barrier **1** of the invention to comply with the norms in force in particular with reference to the reaction to a soft body impact. According to a further aspect of the invention, the pliable constraint point **8** comprises elastic means **11** for the at least partial elastic return of said constraint point **8** to the rest position from a position at least partially yielded because of the application of a load to the barrier **1.**

In other words, by applying a load the constraint point **8** yields at least partially so as to allow the laminar element **2** to bend also in correspondence to said point **8**. However, advantageously, the elastic means **11** at first compress themselves because of the applied load, after this, when the load application ceases, they expand themselves again causing a return to the initial state of the constraint point **8.** If the compression and the spring characteristics allow this, the return is complete, otherwise the laminar element **2** return partially to the rest position from the point of maximum expansion of the constraint point **8.**

Since the elastic means **11** substantially tend to substantially release all the force accumulated for the load application, the return may be violent. In this sense, the constraint point **8** comprises also visco-elastic means **41.** During the application of the load, they are compressed too, however, the viscous component absorbs and dissipates at least partially said compression force, in this way diminishing the force accumulated from the elastic means **11.** When the load application ceases, the elastic means **11** expand more gradually due to the fact that less force is accumulated preventing the return to the rest position of the barrier **1** from being excessively violent. The viscous-elastic means **41** expand again due to their elastic component, but more slowly than the elastic means **11.**

As known, often minor loads are applied to the barrier **1** and the latter would be able to absorb them without damage even if the constraint point **11** were rigid. For this reason it is useful to foresee that the pliability of the constraint point **11** activates only above a predetermined threshold. At first such thershold is obtained by pre-compressing the elastic means **11.**

Since, however, such regulation allows to set thresholds of small entity, according to another aspect of the invention, the constraint point **8** comprises trigger means **10** for the control of the load which must be applied to the barrier **1** for activating said pliability. In other words, the trigger means **10** allow to limit the pliability of the constraint points **8** with loads trespassing a certain minimum threshold of entity greater than that allowed by the pre-compression of the elastic means **11.**

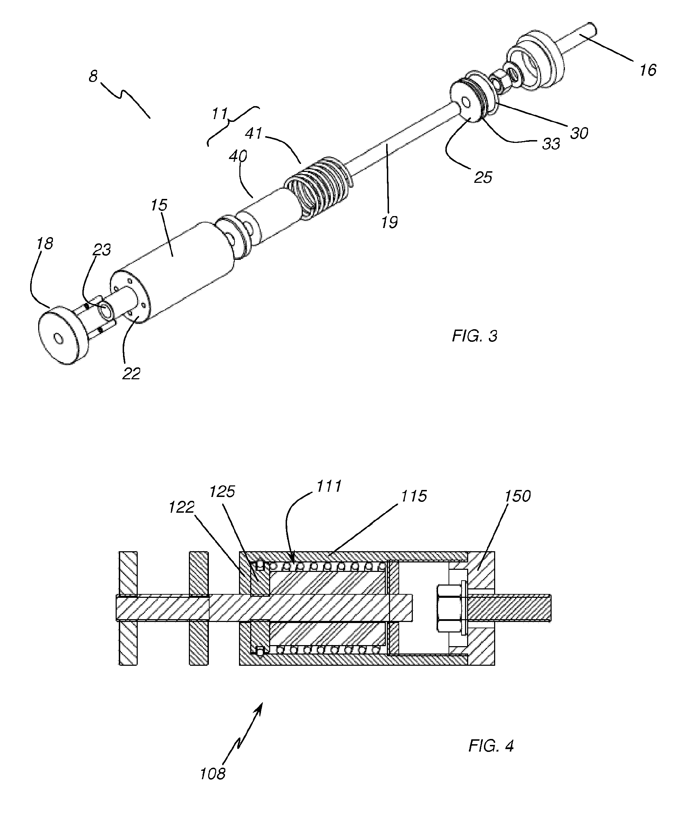

Concerning the detail of the embodiment of the constraint point **8,** accoding to the described non limiting emdobiment, it comprises, as it is observed in the exploded view in fig. 3, an hollow body **15** provided with stable fixing means **16** to the support structure **S.** Such fixing means **16** comprise screws, but it is only one possible example of embodiment.

The constraint point **8** comprises also a glass retaining nut **18** susceptible to compress the laminar element **2** on the hollow body **15** to form the coupling.

There is also one stem **19** for connecting the nut **18** to the hollow body **15.** Such stem **19** has a first end **20,** facing the hollow body **15,** slidably coupled to the latter so as to ensure the pliability mentioned above.

Going even more into detail, the hollow body **15** has, on the wall **22** facing the glass retaining nut **18,** a through hole **23** slidably invested by the first end **20** of the stem **19.** Moreover, to such first end **20** a piston **25** is firmly coupled, which is then placed inside the hollow body **15** and which slides inside such hollow body.

In other words, the constraint point **8** is made pliable from the sliding of the stem **19** supporting the glass retaining nut **18** inside the hollow body **15.** Such pliability, similar to the movement of a piston in a syringe, allows to direct the pliability of the coupling mainly along the axis of the stem **19,** which coincides with the axis of the same constraint point **8.**

According to another aspect of the invention, the trigger means **10** comprise at least one elastic ring **30** interposed between the side surface **31** of the piston **25** and the inner surface **32** of the hollow body **15.** Such ring **30** is partially inserted into a first circumferential groove **33** formed on the side surface **31** of the piston **25** and in a second circumferential groove **34** formed on the inner surface **32** of the hollow body **15.** In presence of a load, the solicitation propagates on the constraint point **8** forcing the nut **18** to distance itself from the hollow body **15.** Such stress is transmitted to the stem **19** and, through this, to the piston **25.** If the load trespasses the threshold, the resistance to the coupling of ring **30** to the two circumferential grooves **33** and **34** is overcome. In this way, the piston is free to slide in the hollow body **15** and together with it the stem **19** and the glass retaining nut **18** slide. The sliding limit just mentioned, which is the pliability of the constraint point **8,** corresponds to the length of the hollow body **15** housing the piston **25.** Obviously, the embodiment of the trigger means just described is only one non limiting example of different embodiments.

According to another aspect of the invention, the elastic means **11** comprise a spring **40** arranged inside said hollow body **15,** coaxial to the stem **19** and interposed between the piston **25** and the wall **22** of the hollow body **15** facing the glass retaing nut **18.** Such spring **40** contrasts, so, the sliding of the piston **25,** by contrasting the distancing of the nut **18** from the hollow body **15.** In other words, such spring **40** contrasts the pliability of the constraint point **8.** Such pliability, so, is regulated not only by the trigger means **10,** but also by the elasticity level of the spring **40.** The latter, moreover, takes back the constraint point **8** to the rest position when the load ceases to solicit it. In particular, the spring **40** allows to reestablish the coupling between the elastic ring **30** and the two circumferential grooves **33, 34.**

As concerns the visco-elastic means **41,** they comprise a damper cylinder arranged inside the hollow body and coaxial to said stem **19,** but such embodiment of the invention is non limiting for different embodiments regarding the visco-elastic means.

In general, as underlined several times above, the embodiment of the invention described above is non limiting and the embodiments may be different without departing from the scope of protection of the present invention. In particular, the constraint point described above is pliable while extracting the stem from the hollow body allowing the laminar element to bend while distancing itself from the constraint point itself.

According to an embodiment observable in fig. 4, the disposition of the piston **125** is opposite to that seen up to now and next to the wall **122** of the hollow body **115.** The elastic means **111** and the visco-elastic means are interposed between the piston **125** and the other wall **150** of the hollow body **115.** Such conformation, advantageously, allows a pliability while the laminar element **2** approaches the constraint point **108.** In this sense, such embodiment is particularly suitable for the manufacturing of the first coupling elements **4**.

According to another embodiment, not represented in the figures, the disposition of the piston is between the stem and the elastic means and the visco-elastic means are arranged on both sides of the piston so that they are interposed between the latter and each of bottom walls of the hollow body.

In this way, the pliability of the constraint point is both in the approaching and in the distancing of the laminar element to/from the constraint point, in this way the latter can be used for the manufacturing of both the first coupling elements and of the second coupling elements.

On the basis of what said above, it is self evident that all the intended objects are fulfilled by the barrier of the invention and all the drawbacks mentioned in the prior art are overcome.

In particular, the barrier, even though a cantilevering one and manufactured with glass plates, complies with the norms in force and passes also the tests of soft body impact.

In fact, the barrier has constraint points which allow the laminar elements, that is the glass plates, to normally bend.

Besides this, it ensures a minimum visual impact so as to make it aesthetically pleasing and particularly useful in case of intervention on the architectural heritage.

The barrier is susceptible to many changes and variants, all falling within the inventive concept expressed in the annexed claims. All particulars may be replaced by other technically equivalent elements, and the materials may be different according to the needs, without departing from the scope of the invention.

Even if the barrier has been described with particular reference to the annexed figures, the numerals referred to in the disclosure and claims are only used for the sake of a better intelligibility of the invention and shall not be intended to limit the claimed scope in any manner

## Claims

1. A barrier couplable to a support structure (**S**) and comprising:
- one or more substantially laminar elements (**2**) at least partially made of glass;
- one or more coupling elements (**3**) of said laminar elements (**2**) to the support structure (**S**),
**characterized in that** at least one of said coupling elements (**3**) comprises one constraint point (**8; 108**) at least partially pliable along the longitudinal axis (**X**) of said constraint point (**8**; **108**), said constraint point comprising:
- elastic means (**11**; **111**) for the at least partial elastic return of said constraint point (**8**; **108**) to the rest position from one position at least partially yielded after the application of a load to said barrier (**1**);
- visco-elastic means (**41**) for the partial absorption of the forces developed by the application of said load to said barrier (**1**) so as to reduce said elastic return caused by said elastic means (**11**; **111**).

2. Barrier according to claim 1, **characterized in that** said constraint point (**8**; **108**) comprise trigger means (**10**) for checking the load that has to be applied to said barrier (**1**) to activate said pliability.

3. Barrier according to claim 2, **characterized in that** said constraint point (**8**; **108**) comprise:
- an hollow body (**15**; **115**) provided with stable fixing means (**16**) to the support structure (**S**);
- at least one glass retaining nut (**18**) susceptible to compress said laminar element (**2**) to said hollow body (**15**; **115**) for making said coupling;
- at least one stem (**19**) for connecting said nut (**18**) to said hollow body (**15**; **115**) a first end (**20**) of which facing said hollow body (**15**; **115**) being slidably coupled to said hollow body (**15**; **115**) so as to ensure the at least said partial pliability.

4. Barrier according to claim 3, **characterized in that** said hollow body (**15**; **115**) has, on the wall (**22**; **122**) facing said glass retaining nut (**18**), a through hole (**23**) slidably invested at least by said first end (**20**) of said stem (**19**).

5. Barrier according to claim 4, **characterized by** comprising at least one piston (**25**; **125**) stably coupled to said first end (**20**) of said stem (**19**) inside said hollow body (**15**; **115**), said piston (**25**; **125**) being susceptible to slide inside said hollow body (**15**; **115**).

6. Barrier according to claim 5, **characterized in that** said trigger means (**10**) comprise at least one elastic ring (**30**) interposed between the side surface (**31**) of said piston (**25**; **125**) and the inner surface (**32**) of said hollow body (**15**; **115**), said ring (**30**) being partially inserted in a first circumferential groove (**33**) fomed on said side surface (**31**) of said piston (**25**; **125**) and being susceptible to be inserted into a second circumferential groove (**34**) formed on said inner surface (**32**) of said hollow body (**15**; **115**).

7. Barrier according to claim 6, **characterized in that** said elastic means (**11**) comprise at least one spring (**40**) arranged inside said hollow body (**15**) and interposed between said piston (**25**) and said wall (**22**) facing said glass retaining nut (**18**).

8. Barrier according to claim 8, **characterized in that** said visco-elastic means (**41**) comprise a damper cylinder arranged inside said hollow body (**15**) and coaxial to said stem (**19**).
